# FASCICULE DE BREVET EUROPEEN

(11) **EP 4 380 861 B1**
(45) Date de publication et mention de la délivrance du brevet: **03.09.2025**
(21) Numéro de dépôt: 22754492.1
(22) Date de dépôt: 22.07.2022
(51) Int. Cl.: B64C 25/60, F16F 9/32, F16F 9/06

(54) **PROCÉDÉ DE FABRICATION D'UN PORTE-DIAPHRAGME POUR AMORTISSEUR OLÉOPNEUMATIQUE**
VERFAHREN ZUR HERSTELLUNG EINES MEMBRANHALTERS FÜR EINEN OLEOPNEUMATISCHEN STOSSDÄMPFER
METHOD FOR MANUFACTURING A DIAPHRAGM HOLDER FOR AN OLEO-PNEUMATIC SHOCK ABSORBER

(30) Priorité: 02.08.2021 FR 2108410
(43) Date de publication de la demande: 12.06.2024
(73) Titulaire: SAFRAN, 75015 Paris (FR); Safran Landing Systems, 78140 Vélizy-Villacoublay (FR)
(72) Inventeur: HATT, Alexandre, 77550 MOISSY-CRAMAYEL (FR); LECLERCQ, Sylvain, Didier, 77550 MOISSY-CRAMAYEL (FR); ROIRAND, Quentin, 77550 MOISSY-CRAMAYEL (FR); JOUBERT, Mathieu, 77550 MOISSY-CRAMAYEL (FR)
(74) Mandataire: Cabinet Beau de Loménie
(86) Numéro de dépôt international: PCT/FR2022/051471
(87) Numéro de publication internationale: WO 2023/012420

(56) Documents cités:
- WO-A1-2021/083913
- FR-A1- 2 999 528
- FR-A1- 3 102 522

## Description

### Domaine Technique

La présente invention concerne le domaine de l'amortissement hydraulique et plus particulièrement un procédé de fabrication d'un porte-diaphragme pour amortisseur de type oléopneumatique équipant notamment, bien que non exclusivement, des atterrisseurs d'aéronef, ainsi qu'un porte diaphragme pouvant être obtenu par ce procédé.

### Technique antérieure

Un amortisseur oléopneumatique peut notamment comprendre un caisson et une tige disposée pour coulisser dans le caisson et définissant avec lui un volume interne séparé en deux chambres par un diaphragme solidaire dudit caisson. L'une des chambres peut être remplie d'un fluide hydraulique tandis que l'autre peut être remplie du même fluide hydraulique et d'un gaz pressurisé. Le diaphragme peut comporter des orifices calibrés au travers desquels le fluide hydraulique peut passer en subissant une résistance hydraulique, afin d'amortir le coulissement de la tige dans le caisson. Les amortisseurs oléopneumatiques peuvent être utilisés dans un grand nombre d'applications pour absorber les vibrations et les impacts, et notamment dans les appuis au sol de véhicules en mouvement. Ainsi, un atterrisseur d'aéronef peut comporter un tel amortisseur oléopneumatique pour l'absorption d'impacts lors de l'atterrissage et celle de vibrations pendant le roulement au sol.

Typiquement, le diaphragme d'un tel amortisseur oléopneumatique est porté par un porte-diaphragme comprenant une première extrémité avec un dôme, et une partie tubulaire s'étendant du dôme à une seconde extrémité destinée à recevoir le diaphragme. Quand l'amortisseur oléopneumatique est destiné à des applications associées à d'importantes charges en pression et compression, comme par exemple dans un atterrisseur d'aéronef, le porte-diaphragme sera normalement dimensionné en conséquence. Traditionnellement les porte-diaphragmes sont usinés en métal. Ceci peut toutefois impliquer des opérations longues et coûteuses, et imposer des limites minimales à l'épaisseur du matériau, avec des conséquences négatives sur la masse et le coût du porte-diaphragme.

Afin de résoudre ces problèmes, des matériaux et procédés de fabrication alternatifs ont été proposés. Ainsi, par exemple, la publication de demande de brevet français FR 2 999 528 A1 a proposé la fabrication par injection de porte-diaphragmes en polymère thermoplastique, afin de diminuer leur masse et temps de fabrication, tout en permettant de résister aux contraintes subies dans des applications telles que les atterrisseurs d'aéronef, et notamment au flambage de la partie tubulaire.

Néanmoins, si l'utilisation d'un polymère thermoplastique, éventuellement renforcé par des fibres courtes, permet d'augmenter la résistance au flambage tout en réduisant la masse du porte-diaphragme, il n'est pas nécessairement de même pour d'autres propriétés mécaniques, et notamment pour la rupture en compression. En outre, le procédé de fabrication par injection impose des contraintes dimensionnelles, notamment en termes d'épaisseur des parois, compliquant la conception structurelle du porte-diaphragme.

Le document FR 3 102 522 A1 montre un procédé de fabrication d'un porte-diaphragme et un porte-diaphragme selon les préambules des revendications 1 et 8.

### Exposé de l'invention

La présente divulgation a donc pour objet de proposer un procédé de fabrication d'un porte diaphragme pour amortisseur de type oléopneumatique offrant une meilleure résistance mécanique avec une masse encore plus réduite, ainsi qu'un porte-diaphragme pouvant résulter de ce procédé.

A cet effet, suivant un premier aspect de cette divulgation, le procédé de fabrication du porte-diaphragme, qui peut comprendre une première extrémité avec un dôme, et une partie tubulaire s'étendant du dôme à une seconde extrémité, peut comprendre une étape de surmoulage d'un premier matériau sur un insert. Ce surmoulage peut notamment être effectué par moulage-injection.

Grâce à l'inclusion de l'insert et au surmoulage du premier matériau, il est possible d'obtenir des épaisseurs de paroi et des géométries complexes, notamment avec des raidisseurs, qui ne pourraient pas être facilement obtenues par simple injection.

En particulier, le premier matériau peut comprendre un polymère thermoplastique, permettant ainsi un surmoulage par injection. Ce polymère thermoplastique du premier matériau peut notamment être une polyétheréthercétone, dont les propriétés thermomécaniques sont particulièrement avantageuses pour des applications dans lesquelles le porte-diaphragme peut être soumis à d'importantes contraintes thermiques et mécaniques. Afin de renforcer son polymère thermoplastique, le premier matériau peut aussi comprendre des fibres, et notamment des fibres de longueur inférieure à 1 mm, pour faciliter leur injection en suspension dans le polymère thermoplastique à l'état liquide. Ces fibres peuvent par exemple être en carbone, matériau permettant de renforcer et rigidifier sensiblement le polymère thermoplastique, tout en réduisant son coefficient de dilatation thermique et pouvant lui conférer une importante conductivité électrique.

L'insert peut être en matériau identique au premier matériau, ce qui permet d'obtenir une bonne adhésion au surmoulage. Toutefois, l'insert peut alternativement être en un deuxième matériau, différent du premier matériau, et ayant un rapport de la contrainte de rupture en compression à la densité plus élevé que le premier matériau.

Le surmoulage du premier matériau sur le deuxième matériau permet ainsi de combiner leurs propriétés mécaniques, et notamment d'utiliser le premier matériau contre le flambage, et le deuxième matériau contre la rupture par compression.

Dans ce cas, le deuxième matériau peut notamment comprendre un polymère thermoplastique ou thermodurcissable. Des polymères thermoplastiques, voire même un polymère thermoplastique commun, peuvent donc être utilisés tant pour le premier matériau que pour le deuxième matériau, ce qui permet d'améliorer l'adhésion entre les deux par soudage. En outre, ce polymère thermoplastique ou thermodurcissable du deuxième matériau peut être renforcé par des fibres continues, par exemple des fibres continues en carbone permettant d'augmenter sensiblement la contrainte de rupture du deuxième matériau au moins dans un axe. Ces fibres continues peuvent par exemple être tressées, bobinées ou déposées par couches tissées ou unidirectionnelles.

Alternativement, toutefois, le deuxième matériau peut être métallique, par exemple un acier ou un alliage léger tel qu'un alliage d'aluminium. Dans ce cas, un filetage, notamment pour joindre le diaphragme au porte-diaphragme, pourrait être arrangé sur une surface de l'insert affleurant à la seconde extrémité du porte-diaphragme, le matériau métallique étant particulièrement adapté pour recevoir un tel filetage.

Un deuxième aspect de la présente divulgation concerne le porte-diaphragme, pour amortisseur de type oléopneumatique, comprenant une première extrémité avec un dôme, et une partie tubulaire s'étendant du dôme à une seconde extrémité, ce porte-diaphragme incluant un premier matériau surmoulé sur un insert. L'insert peut notamment s'étendre dans la partie tubulaire du porte-diaphragme pour la renforcer en compression suivant un axe principal de la partie tubulaire. Il peut alors être tubulaire, et le premier matériau recouvrir au moins en partie l'insert radialement à l'intérieur et à l'extérieur pour ainsi maximiser sa surface de contact et donc son adhésion à l'insert.

Alternativement ou en complément à s'étendre dans la partie tubulaire du porte-diaphragme, l'insert peut s'étendre dans le dôme, de manière à renforcer celui-ci contre l'écrasement.

L'insert peut par ailleurs présenter un ou plusieurs orifices traversés par le premier matériau, afin notamment d'améliorer l'ancrage de l'insert dans le premier matériau, ainsi que pour faciliter l'écoulement du premier matériau lors d'une étape de surmoulage du premier matériau sur l'insert. Ainsi, par exemple, le premier matériau, pénétrant dans un ou plusieurs orifices radiaux dans une paroi tubulaire de l'insert, peut former une liaison de forme assurant la transmission de forces axiales entre le premier matériau et l'insert. D'autre part, un orifice axial dans l'insert, disposé dans une zone centrale du dôme, en regard avec un port d'injection lorsque l'insert est situé dans un moule pour le surmoulage avec le premier matériau, peut faciliter l'écoulement du premier matériau autour de l'insert.

Le porte-diaphragme peut présenter par ailleurs des raidisseurs sous forme de nervures sur une ou plusieurs surfaces externes. En particulier, ces nervures peuvent comprendre des nervures longitudinales sur une surface externe de la partie tubulaire pour la renforcer contre le flambage et/ou des nervures radiales et/ou cylindriques sur une surface externe du dôme pour le renforcer contre l'écrasement. Pour renforcer encore plus la partie tubulaire, l'insert peut aussi y présenter des nervures longitudinales alignées avec celles sur la surface externe de la partie tubulaire.

Le porte-diaphragme peut présenter aussi des orifices radiaux traversant la partie tubulaire, pour permettre l'écoulement de fluide hydraulique dans l'amortisseur oléopneumatique. Les nervures longitudinales peuvent s'étendre autour des orifices radiaux traversant la partie tubulaire, afin de la renforcer localement pour éviter que des fissures puissent se propager à partir de ces orifices radiaux traversants.

Un troisième aspect de la présente divulgation concerne un amortisseur de type oléopneumatique comprenant le porte-diaphragme du deuxième aspect.

Un quatrième aspect de la présente divulgation concerne un atterrisseur d'aéronef comprenant l'amortisseur de type oléopneumatique du troisième aspect.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] La figure 1 est une vue schématique en perspective d'un atterrisseur d'aéronef.
[Fig. 2] La figure 2 est une vue schématique en coupe longitudinale d'un amortisseur oléopneumatique de l'atterrisseur de la figure 1.
[Fig. 3] La figure 3 est une vue en perspective d'un premier mode de réalisation d'un porte-diaphragme pour l'amortisseur de la figure 2.
[Fig. 4] La figure 4 est une vue en coupe longitudinale du porte-diaphragme dans le plan IV-IV de la figure 3.
[Fig. 4A] La figure 4A est une vue agrandie de la région IVA de la figure 4.
[Fig. 4B] La figure 4B est une vue en coupe transversale du porte-diaphragme suivant le premier mode de réalisation dans le plan IVB-IVB de la figure 4.
[Fig. 4C] La figure 4C est une vue en coupe transversale du porte-diaphragme suivant le premier mode de réalisation dans le plan IVC-IVC de la figure 4.
[Fig. 5] La figure 5 est une vue en perspective de l'insert du porte-diaphragme suivant le premier mode de réalisation.
[Fig. 6] La figure 6 est une vue de détail en coupe longitudinale d'un porte-diaphragme suivant un deuxième mode de réalisation.
[Fig. 7] La figure 7 est une vue de détail en coupe longitudinale d'un porte-diaphragme suivant un troisième mode de réalisation.
[Fig. 8] La figure 8 est une vue de détail en coupe longitudinale d'un porte-diaphragme suivant un quatrième mode de réalisation.
[Fig. 9] La figure 9 est une vue en coupe longitudinale d'un porte-diaphragme suivant un cinquième mode de réalisation.
[Fig. 10] La figure 10 est une vue schématique d'une étape d'un procédé de fabrication du porte diaphragme suivant l'un quelconque des premier à cinquième modes de réalisation.

### Description des modes de réalisation

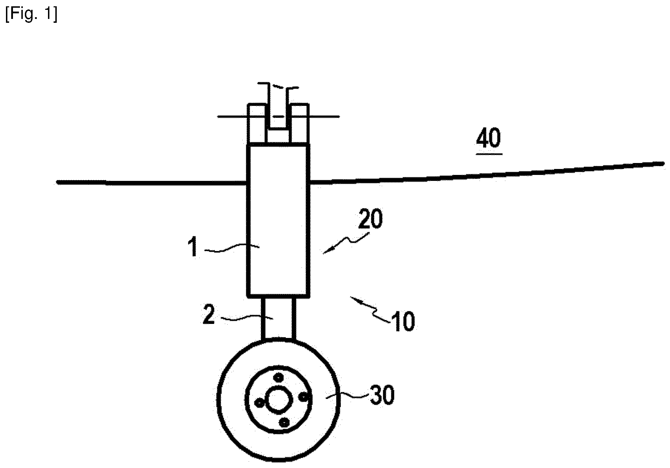

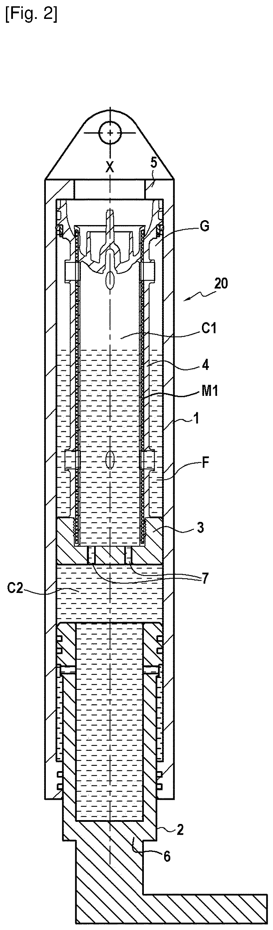

La figure 1 représente un atterrisseur d'aéronef 10 comprenant un amortisseur 20 de type oléopneumatique, qui est illustré en plus grand détail sur la figure 2. Un tel amortisseur 20 peut comporter un caisson 1 dans lequel une tige 2 soit montée coulissante selon un axe principal X. Une extrémité inférieure de la tige 2 peut être agencée pour recevoir un essieu ou un bogie portant une ou plusieurs roues 30 et/ou d'autres dispositifs de contact avec le sol, tandis qu'une extrémité supérieure du caisson 1 peut être reliée mécaniquement à la structure de l'aéronef 40. Cet arrangement peut toutefois être inversé, avec la tige 2 reliée mécaniquement à la structure de l'aéronef 40 et le caisson 1 portant le dispositif de contact avec le sol.

L'amortisseur 20 peut comporter en un diaphragme 3 pour séparer l'intérieur du caisson 1 et de la tige 2 en une première chambre C1 remplie d'un fluide hydraulique F et d'un gaz G sous pression et une deuxième chambre C2 remplie de fluide hydraulique F, ainsi qu'un porte-diaphragme 4 sensiblement tubulaire, pouvant s'étendre, suivant l'axe principal X, d'une première extrémité 101 couplée à un plafond 5 du caisson 1, jusqu'à une deuxième extrémité 102 portant le diaphragme 3. La deuxième chambre C2 peut par ailleurs être délimitée par un fond 6 rapporté dans la tige 2. Le diaphragme 3 peut présenter des orifices calibrés 7 pour permettre au fluide hydraulique F de traverser de la première chambre C1 à la deuxième chambre C2 et vice versa. La tige 2, en coulissant dans le caisson 1, peut ainsi faire varier le volume de la deuxième chambre C2, forçant ainsi le déplacement de fluide hydraulique F entre la première chambre C1 et la deuxième chambre C2, avec une perte de charge déterminée par les orifices calibrés 7, de manière à amortir le mouvement relatif entre la tige 2 et le caisson 1.

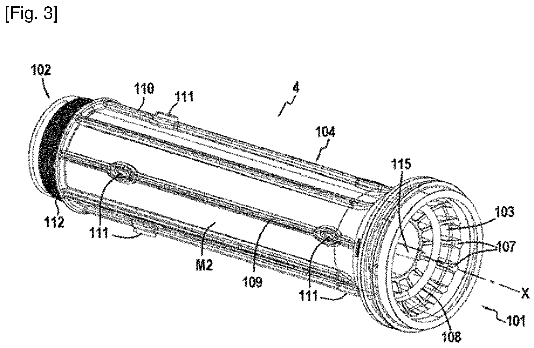

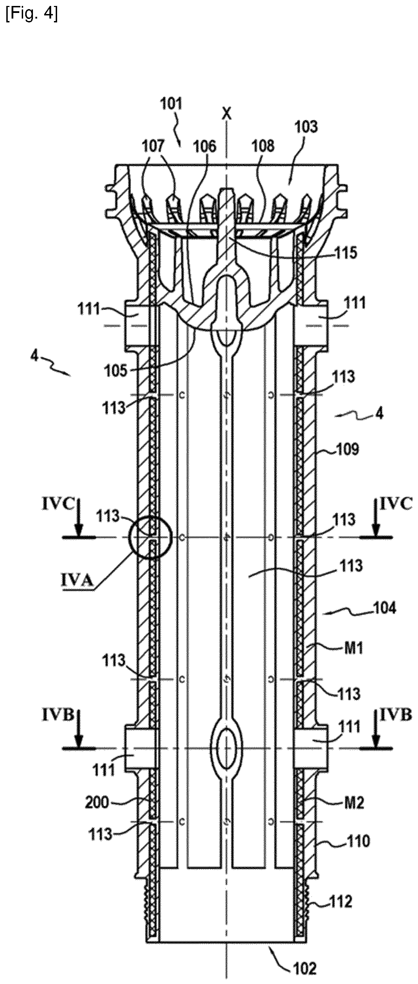

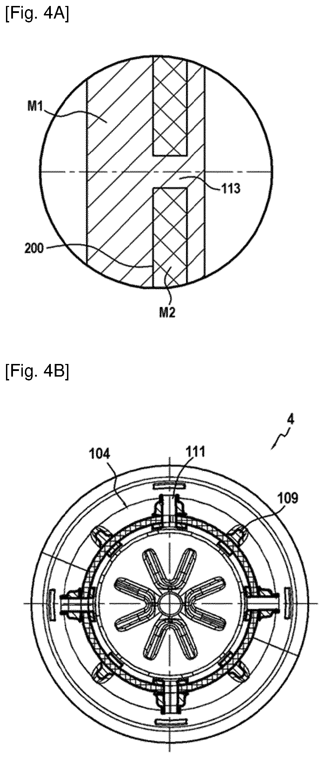

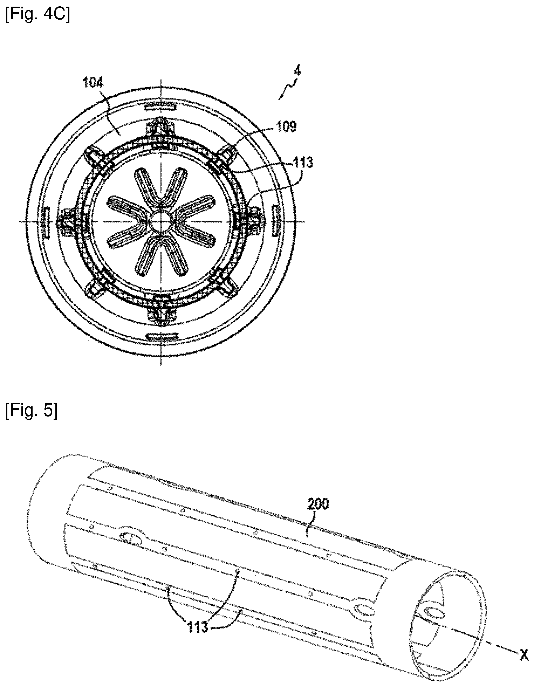

Un porte-diaphragme 4 suivant un premier mode de réalisation de l'invention est illustré en plus grand détail sur les figures 3 et 4. Comme l'on peut voir sur ces figures, ce porte-diaphragme 4 peut comprendre un dôme 103, situé à la première extrémité 101, et une partie tubulaire 104 s'étendant du dôme 103 à la seconde extrémité 102. Le dôme 103 peut présenter une surface interne 105 convexe, et une surface externe 106 avec des raidisseurs en forme de nervures radiales 107 et cylindriques 108, afin de le renforcer contre l'écrasement. La partie tubulaire 104 aussi peut présenter des raidisseurs, en particulier en forme de nervures longitudinales 109 sur sa surface externe 110, afin de renforcer cette partie tubulaire 104 contre le flambement. En outre, la partie tubulaire 104 peut présenter des orifices traversants radiaux 111 pour permettre la circulation du fluide hydraulique F, voire du gaz G, entre l'extérieur et l'intérieur du porte-diaphragme 4 dans la première chambre C1 de l'amortisseur 10. Comme illustré sur les figures 3 et 4, les orifices 111 peuvent être alignés avec les nervures 109, de manière à ce que les nervures 109 renforcent le pourtour de chaque orifice 111 pour éviter la propagation de fissures à partir de ces orifices 111. La surface externe 110 de la partie tubulaire 104 peut aussi présenter un filetage 112 à proximité de la seconde extrémité 102 pour assurer le couplage du porte-diaphragme 4 avec le diaphragme 3.

Comme illustré sur la figure 4, le porte-diaphragme 4 peut être formé par un premier matériau M1 surmoulé sur un insert 200 d'un deuxième matériau M2. Ainsi, le deuxième matériau M2 peut être choisi pour renforcer le porte-diaphragme 4 contre la rupture en compression, notamment avec une valeur de contrainte de rupture en compression qui, divisée par la masse volumique du matériau, soit plus élevée que celle du premier matériau M1. Pour permettre son surmoulage sur l'insert 200, le premier matériau M1 peut comprendre un polymère thermoplastique, tel que par exemple une polyétheréthercéthone (souvent désignée par son sigle anglais PEEK), éventuellement renforcé par des fibres, notamment des fibres de carbone. Afin de permettre son surmoulage par moulage-injection, ces fibres peuvent être des fibres courtes, c'est-à-dire des fibres d'une longueur inférieure à 1 mm, par exemple d'environ 0,1 mm de longueur pour 8 µm de diamètre. Les fibres peuvent former par exemple 30 ou 40% de la masse du premier matériau M1. Le deuxième matériau M2 peut aussi être un polymère renforcé par des fibres. En particulier, afin d'obtenir une meilleure résistance à la compression, par rapport à la masse volumique, que dans le premier matériau M1, les fibres du deuxième matériau M2 peuvent être des fibres continues, p.ex. des fibres tressées, bobinées ou disposées par couches unidirectionnelles et/ou tissées. Afin d'obtenir une bonne adhésion au premier matériau M1, le deuxième matériau M2 pourrait comprendre un polymère thermoplastique similaire, voire identique, à celui du premier matériau M1. Toutefois, étant donné que la forme de l'insert 200 pourrait être plus simple que celle du porte-diaphragme 4 complet, et qu'il pourrait donc être fabriqué par des procédés alternatifs à l'injection, il est également envisageable d'utiliser un polymère thermodurcissable plutôt que thermoplastique. Il serait même envisageable d'utiliser, en tant que deuxième matériau M2, un matériau métallique, comme par exemple un acier ou un alliage léger, notamment un alliage en aluminium.

Comme illustré sur la figure 4, l'insert 200 peut notamment s'étendre dans la partie tubulaire 104 du porte-diaphragme 4, et être alors lui-même tubulaire. En particulier, afin de maximiser la surface de contact et donc l'adhésion entre le premier matériau M1 et le deuxième matériau M2, l'insert 200 peut être noyé dans le premier matériau de telle manière que le premier matériau M1 recouvre au moins partiellement le deuxième matériau M2 tant sur la surface externe 110 de la partie tubulaire 104 que sur sa surface interne 113. L'insert 200 peut néanmoins affleurer au moins partiellement à travers le premier matériau M1. Ainsi, comme illustré sur les figures 3, 4, 4B et 4C, afin de limiter la masse du porte-diaphragme 4, le premier matériau M1 peut être ajouré sur les surfaces interne et/ou externe 113, 110 de la partie tubulaire 104, de manière à laisser partiellement apparaître l'insert 200.

Comme illustré sur les figures 4B, 4C et 5, l'insert 200 peut lui-même présenter des nervures longitudinales 120, noyées dans les nervures longitudinales 109 du porte-diaphragme 4. La liaison adhésive du premier matériau M1 sur l'insert 200 peut être aussi renforcée par une liaison de forme en formant, dans l'insert 200, des orifices radiaux 113 qui soient traversés par le premier matériau M1, comme plus clairement visible sur la figure 4A. En particulier, comme illustré sur les figures 4, 4A et 4C, ces orifices radiaux 113 peuvent être situés sur les nervures longitudinales 109. Ils peuvent avoir un diamètre d de, par exemple, environ 10 mm.

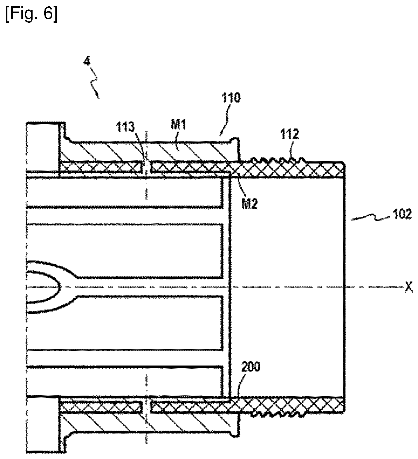

Un deuxième mode de réalisation est illustré sur la figure 6, dans lequel l'insert 200 peut affleurer à la surface externe 110 du porte-diaphragme 4 à proximité de la seconde extrémité 102, de manière à permettre la formation du filetage 112 sur la surface exposée de ce deuxième matériau M2, en particulier quand ce deuxième matériau M2 est métallique. Les autres éléments du porte-diaphragme suivant ce deuxième mode de réalisation peuvent être identiques, ou au moins équivalents à ceux du porte-diaphragme 4 suivant le premier mode de réalisation et reçoivent en conséquence les mêmes repères sur la figure 6 que sur les figures précédentes.

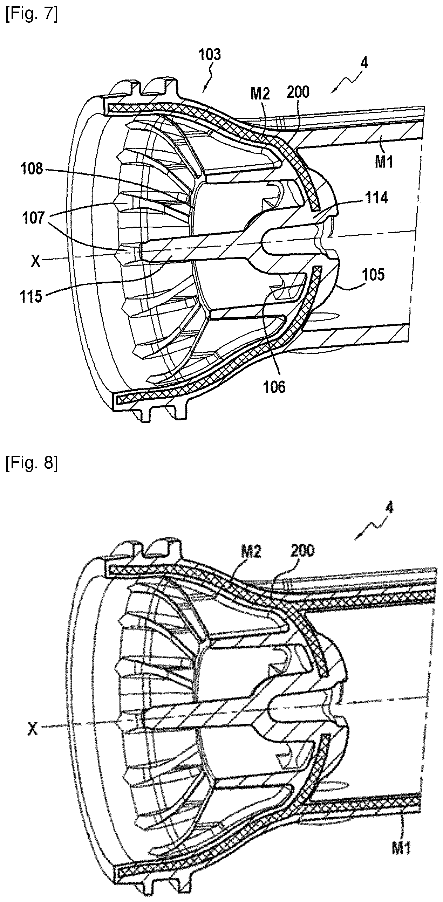

Un troisième mode de réalisation est illustré sur la figure 7, dans lequel l'insert 200 peut s'étendre dans le dôme 103, afin de le renforcer contre l'écrasement. Dans ce cas, l'insert 200 peut présenter un orifice traversant axial 114, situé en particulier dans une zone centrale du dôme 103, qui peut être sensiblement aligné avec une carotte d'injection 115 sur la surface externe 106 du dôme 103, afin de faciliter l'écoulement du premier matériau M1 sur les surfaces interne 105 et externe 106 du dôme 103 lors de son surmoulage sur l'insert 200. Les autres éléments du porte-diaphragme suivant ce troisième mode de réalisation peuvent être identiques, ou au moins équivalents à ceux du porte-diaphragme 4 suivant les modes de réalisation précédents et reçoivent en conséquence les mêmes repères sur la figure 7 que sur les figures précédentes.

Il est bien sûr également envisageable de combiner les caractéristiques du troisième mode de réalisation avec celles du premier ou du deuxième modes de réalisation pour obtenir un quatrième mode de réalisation dans lequel l'insert 200 s'étende dans le dôme 103 et dans la partie tubulaire 104, comme illustré sur la figure 8. Les autres éléments du porte-diaphragme suivant ce quatrième mode de réalisation peuvent être identiques, ou au moins équivalents à ceux du porte-diaphragme 4 suivant les modes de réalisation précédents et reçoivent en conséquence les mêmes repères sur la figure 8 que sur les figures précédentes.

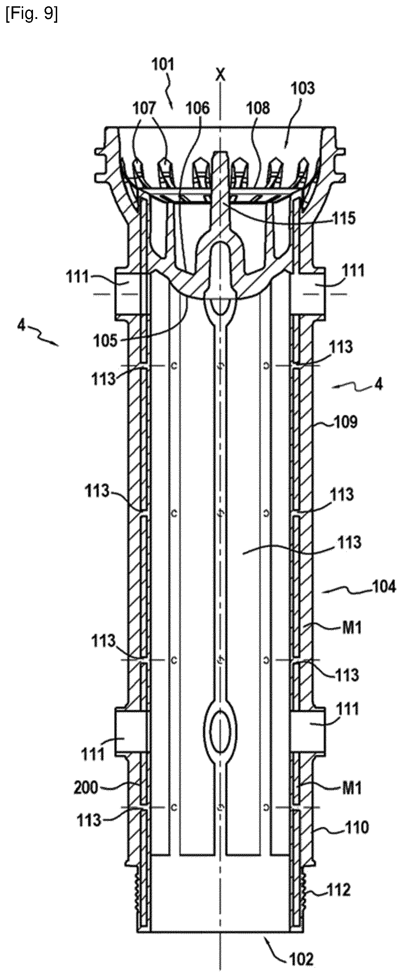

L'insert n'est pas nécessairement en un deuxième matériau M2 différent du premier matériau M1, mais peut également être en matériau identique. Ainsi, dans un cinquième mode de réalisation illustré sur la figure 9, l'insert 200 est en matériau identique au premier matériau M1. Les autres éléments du porte-diaphragme suivant ce cinquième mode de réalisation peuvent être identiques, ou au moins équivalents à ceux du porte-diaphragme 4 suivant le premier mode de réalisation et reçoivent en conséquence les mêmes repères sur la figure 9 que sur les figures précédentes. Il est bien sûr également envisageable de combiner les caractéristiques de ce cinquième mode de réalisation avec celles de chacun des deuxième à quatrième modes de réalisation.

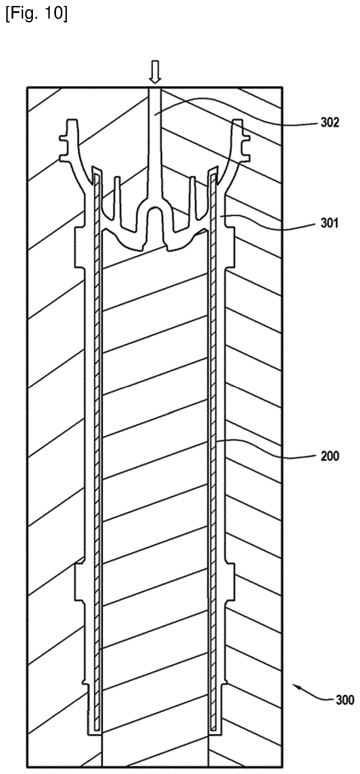

Dans chacun de ces modes de réalisation, le porte-diaphragme 4 peut être fabriqué suivant un procédé comprenant une étape de surmoulage de l'insert avec le premier matériau. Si l'insert est en polymère renforcé par des fibres continues, il peut notamment avoir été fabriqué par tressage, bobinage et/ou empilement, tandis que si l'insert est métallique, il peut par exemple avoir été fabriqué par extrusion, enroulement, usinage et/ou fabrication additive. Si l'insert est en matériau identique au premier matériau, et notamment si ce premier matériau est un polymère thermoplastique éventuellement renforcé par des fibres courtes, l'insert peut même avoir été fabriqué par moulage-injection. Le surmoulage avec le premier matériau M1 peut ensuite s'effectuer en plaçant l'insert 200 dans un moule 300 avec une cavité 301 présentant la forme nette du porte-diaphragme 4, comme illustré sur la figure 10, et en y injectant le premier matériau M1 à travers un port d'injection 302 qui peut être aligné avec ladite zone centrale du dôme 103, formant ainsi la carotte d'injection 115. Après la solidification du premier matériau M1, le porte-diaphragme 4 peut être démoulé.

Quoique la présente invention ait été décrite en se référant à des exemples de réalisation spécifiques, il est évident que différentes modifications et changements peuvent être effectués sur cet exemple sans sortir de la portée générale de l'invention telle que définie par les revendications. Par conséquent, la description et les dessins doivent être considérés dans un sens illustratif plutôt que restrictif.

## Revendications

1. Procédé de fabrication d'un porte-diaphragme (4) pour amortisseur (20) de type oléopneumatique, le porte-diaphragme (4) comprenant une première extrémité (101) avec un dôme (103), et une partie tubulaire (104) s'étendant du dôme (103) à une seconde extrémité (102), le procédé étant **caractérisé en ce qu'**il comprend une étape de surmoulage d'un premier matériau (M1) sur un insert (200).

2. Procédé de fabrication d'un porte-diaphragme (4) suivant la revendication 1, dans lequel l'insert (200) est en un deuxième matériau (M2), différent du premier matériau (M1), et ayant un rapport de la contrainte de rupture en compression à la densité plus élevé que le premier matériau (M1).

3. Procédé de fabrication d'un porte-diaphragme (4) suivant la revendication 2, dans lequel le deuxième matériau (M2) comprend un polymère thermoplastique ou thermodurcissable renforcé par des fibres continues.

4. Procédé de fabrication d'un porte-diaphragme (4) suivant la revendication 2, dans lequel le deuxième matériau (M2) est métallique.

5. Procédé de fabrication d'un porte-diaphragme (4) suivant la revendication 1, dans lequel l'insert (200) est en matériau identique au premier matériau (M1).

6. Procédé de fabrication d'un porte-diaphragme (4) suivant l'une quelconque des revendications précédentes, dans lequel dans lequel le premier matériau (M1) comprend un polymère thermoplastique, tel que par exemple une polyétheréthercétone.

7. Procédé de fabrication d'un porte-diaphragme (4) suivant la revendication 6, dans lequel le premier matériau (M1) comprend des fibres de longueur inférieure à 1 mm, par exemple en carbone, noyées dans le polymère thermoplastique du premier matériau (M1).

8. Porte-diaphragme (4) pour amortisseur (20) de type oléopneumatique, le porte-diaphragme (4) comprenant une première extrémité (101) avec un dôme (103), et une partie tubulaire (104) s'étendant du dôme (103) à une seconde extrémité (102), **caractérisé en ce qu'**il inclut un premier matériau (M1) surmoulé sur un insert (200).

9. Porte-diaphragme (4) suivant la revendication 8, dans lequel le premier matériau (M1) comprend un polymère thermoplastique, tel que par exemple une polyétheréthercétone.

10. Porte-diaphragme (4) suivant la revendication 9, dans lequel le premier matériau (M1) comprend des fibres de longueur inférieure à 1 mm, par exemple en carbone, noyées dans le polymère thermoplastique du premier matériau (M1).

11. Porte diaphragme (4) suivant l'une quelconque des revendications 8 à 10, dans lequel l'insert (200) est en un deuxième matériau (M2), différent du premier matériau (M1), et ayant rapport de la contrainte de rupture en compression à la densité plus élevé que le premier matériau (M1).

12. Porte-diaphragme (4) suivant la revendication 11, dans lequel le deuxième matériau (M2) comprend un polymère thermoplastique ou thermodurcissable renforcé par des fibres continues.

13. Porte-diaphragme (4) suivant la revendication 11, dans lequel le deuxième matériau (M2) est métallique.

14. Porte-diaphragme (4) suivant l'une quelconque des revendications 8 à 10, dans lequel l'insert (200) est en matériau identique au premier matériau (M1)

15. Porte-diaphragme (4) suivant l'une quelconque des revendications 13 ou 14, avec un filetage (112) sur une surface de l'insert (200) affleurant à la seconde extrémité (102) du porte-diaphragme (4).

16. Porte-diaphragme (4) suivant l'une quelconque des revendications 8 à 15, dans lequel l'insert (200) s'étend dans la partie tubulaire (104) du porte-diaphragme (4).

17. Porte-diaphragme (4) suivant la revendication 16, dans lequel l'insert (200) est tubulaire et le premier matériau (M1) recouvre au moins en partie l'insert (200) radialement à l'intérieur et à l'extérieur.

18. Porte-diaphragme (4) suivant l'une quelconque des revendications 8 à 17, dans lequel l'insert (200) s'étend dans le dôme (103).

19. Porte-diaphragme (4) suivant l'une quelconque des revendications 8 à 18, dans lequel l'insert (200) présente un ou plusieurs orifices (113) traversés par le premier matériau (M1).

20. Porte-diaphragme (4) suivant l'une quelconque des revendications 8 à 19, avec des nervures (107,108,109) sur une ou plusieurs surfaces externes (106,110).

21. Amortisseur (20) de type oléopneumatique comprenant le porte-diaphragme (4) suivant l'une quelconque des revendications 8 à 20.

22. Atterrisseur d'aéronef (10) comprenant l'amortisseur (20) de type oléopneumatique suivant la revendication 21.

## Patentansprüche

1. Verfahren zur Herstellung eines Membranhalters (4) für einen Dämpfer (20) ölpneumatischer Art, der Membranhalter (4) umfassend ein erstes Ende (101) mit einer Kuppel (103) und einen rohrförmigen Abschnitt (104), der sich von der Kuppel (103) zu einem zweiten Ende (102) erstreckt, wobei das Verfahren **dadurch gekennzeichnet ist, dass** es einen Schritt eines Überformens eines ersten Materials (M1) auf einen Einsatz (200) umfasst.

2. Verfahren zur Herstellung eines Membranhalters (4) nach Anspruch 1, wobei der Einsatz (200) aus einem zweiten Material (M2) ist, das sich von dem ersten Material (M1) unterscheidet und ein höheres Verhältnis von Druckbruchspannung zu Dichte als das erste Material (M1) aufweist.

3. Verfahren zur Herstellung eines Membranhalters (4) nach Anspruch 2, wobei das zweite Material (M2) ein thermoplastisches oder duroplastisches Polymer umfasst, das mit Endlosfasern verstärkt ist.

4. Verfahren zur Herstellung eines Membranhalters (4) nach Anspruch 2, wobei das zweite Material (M2) metallisch ist.

5. Verfahren zur Herstellung eines Membranhalters (4) nach Anspruch 1, wobei der Einsatz (200) aus einem Material ist, das mit dem ersten Material (M1) identisch ist.

6. Verfahren zur Herstellung eines Membranhalters (4) nach einem der vorherigen Ansprüche, wobei in diesem Verfahren das erste Material (M1) ein thermoplastisches Polymer, wie beispielsweise ein Polyetheretherketon, umfasst.

7. Verfahren zur Herstellung eines Membranhalters (4) nach Anspruch 6, wobei das erste Material (M1) Fasern mit einer Länge von weniger als 1 mm, beispielsweise aus Kohlenstoff, umfasst, die in das thermoplastische Polymer des ersten Materials (M1) eingebettet sind.

8. Membranhalter (4) für einen Dämpfer (20) ölpneumatischer Art, der Membranhalter (4) umfassend ein erstes Ende (101) mit einer Kuppel (103) und einen rohrförmigen Abschnitt (104), der sich von der Kuppel (103) zu einem zweiten Ende (102) erstreckt, **dadurch gekennzeichnet, dass** er ein erstes Material (M1) beinhaltet, das auf einen Einsatz (200) überformt ist.

9. Membranhalter (4) nach Anspruch 8, wobei das erste Material (M1) ein thermoplastisches Polymer, wie beispielsweise Polyetheretherketon, umfasst.

10. Membranhalter (4) nach Anspruch 9, wobei das erste Material (M1) Fasern mit einer Länge von weniger als 1 mm, beispielsweise aus Kohlenstoff, umfasst, die in das thermoplastische Polymer des ersten Materials (M1) eingebettet sind.

11. Membranhalter (4) nach einem der Ansprüche 8 bis 10, wobei der Einsatz (200) aus einem zweiten Material (M2) ist, das sich von dem ersten Material (M1) unterscheidet und ein höheres Verhältnis von Druckbruchspannung zu Dichte als das erste Material (M1) aufweist.

12. Membranhalter (4) nach Anspruch 11, wobei das zweite Material (M2) ein thermoplastisches oder duroplastisches Polymer umfasst, das mit Endlosfasern verstärkt ist.

13. Membranhalter (4) nach Anspruch 11, wobei das zweite Material (M2) metallisch ist.

14. Membranhalter (4) nach einem der Ansprüche 8 bis 10, wobei der Einsatz (200) aus einem Material ist, das mit dem ersten Material (M1) identisch ist.

15. Membranhalter (4) nach einem der Ansprüche 13 oder 14, mit einem Gewinde (112) auf einer Oberfläche des Einsatzes (200), das am zweiten Ende (102) des Membranhalters (4) freiliegt.

16. Membranhalter (4) nach einem der Ansprüche 8 bis 15, wobei sich der Einsatz (200) in den rohrförmigen Abschnitt (104) des Membranhalters (4) erstreckt.

17. Membranhalter (4) nach Anspruch 16, wobei der Einsatz (200) rohrförmig ist und das erste Material (M1) den Einsatz (200) zumindest teilweise radial innen und außen bedeckt.

18. Membranhalter (4) nach einem der Ansprüche 8 bis 17, wobei sich der Einsatz (200) in die Kuppel (103) erstreckt.

19. Membranhalter (4) nach einem der Ansprüche 8 bis 18, wobei der Einsatz (200) eine oder mehrere Öffnungen (113) aufweist, die von dem ersten Material (M1) durchdrungen sind.

20. Membranhalter (4) nach einem der Ansprüche 8 bis 19, mit Rippen (107, 108, 109) auf einer oder mehreren Außenflächen (106, 110).

21. Dämpfer (20) ölpneumatischer Art, umfassend den Membranhalter (4) nach einem der Ansprüche 8 bis 20.

22. Flugzeugfahrwerk (10), umfassend den Dämpfer (20) ölpneumatischer Art nach Anspruch 21.

## Claims

1. A method for manufacturing a diaphragm holder (4) for a shock absorber (20) of the oleo-pneumatic type, the diaphragm holder (4) comprising a first end (101) with a dome (103), and a tubular portion (104) extending from the dome (103) to a second end (102), the method being **characterized in that** it comprises a step of overmolding a first material (M1) onto an insert (200).

2. The method for manufacturing a diaphragm holder (4) according to claim 1, wherein the insert (200) is of a second material (M2), different from the first material (M1) and having a higher ratio of compression breaking stress to density than the first material (M1).

3. The method for manufacturing a diaphragm holder (4) according to claim 2, wherein the second material (M2) comprises a thermoplastic or thermosetting polymer reinforced with continuous fibers.

4. The method for manufacturing a diaphragm holder (4) according to claim 2, wherein the second material (M2) is metallic.

5. The method for manufacturing a diaphragm holder (4), according to claim 1, wherein the insert (200) is of a material identical to the first material (M1).

6. The method for manufacturing a diaphragm holder (4) according to any one of the preceding claims, wherein the first material (M1) comprises a thermoplastic polymer, such as for example a polyether etherketone.

7. The method for manufacturing a diaphragm holder (4) according to claim 6, wherein the first material (M1) comprises fibers with lengths smaller than 1 mm, of carbon for example, embedded in the thermoplastic polymer of the first material (M1).

8. A diaphragm holder (4) for a shock absorber (20) of the oleo-pneumatic type, the diaphragm holder (4) comprising a first end (101) with a dome (103), and a tubular portion (104) extending from the dome (103) to a second end (102), **characterized in that** it includes a first material (M1) overmolded onto an insert (200).

9. The diaphragm holder (4) according to claim 8, wherein the first material (M1) comprises a thermoplastic polymer, such as for example a polyether etherketone.

10. The diaphragm holder (4) according to claim 9, wherein the first material (M1) comprises fibers with a length less than 1 mm, of carbon for example, embedded in the thermoplastic polymer of the first material (M1).

11. The diaphragm holder (4) according to any one of claims 8 to 10, wherein the insert (200) is of a second material (M2), different from the first material (M1), and having a higher ratio of compression breaking stress to density than the first material (M1).

12. The diaphragm holder (4) according to claim 11, wherein the second material (M2) comprises a thermoplastic or thermosetting polymer reinforced with continuous fibers.

13. The diaphragm holder (4) according to claim 11, wherein the second material (M2) is metallic.

14. The diaphragm holder (4) according to any one of claims 8 through 10, wherein the insert (200) is of a material identical with the first material (M1).

15. The diaphragm holder (4) according to any one of claims 13 or 14, with a thread (112) on a surface of the insert (200) flush with the second end (102) of the diaphragm holder (4).

16. The diaphragm holder (4) according to any one of claims 8 to 15, wherein the insert (200) extends into the tubular portion (104) of the diaphragm holder (4).

17. The diaphragm holder (4) according to claim 16, wherein the insert (200) is tubular and the first material (M1) covers, at least partially, the insert (200) radially inside and outside.

18. The diaphragm holder (4) according to any one of claims 8 to 17, wherein the insert (200) extends into the dome (103).

19. The diaphragm holder (4) according to any one of claims 8 to 18, wherein the insert (200) has one or more openings (113) through which the first material (M1) passes.

20. The diaphragm holder (4) according to any one of claims 8 to 19, with ribs (107,108,109) on one or more outer surfaces (106,110).

21. A shock absorber (20) of the oleo-pneumatic type comprising the diaphragm holder (4) according to any one of claims 8 to 20.

22. An aircraft landing gear (10) comprising the shock absorber (20) of the oleo-pneumatic type according to claim 21.
